Europäisches Patentamt

European Patent Office

Office européen des brevets

(11) Veröffentlichungsnummer: **0 129 142**
**B1**

(12) **EUROPÄISCHE PATENTSCHRIFT**

(45) Veröffentlichungstag der Patentschrift:
01.04.87

(21) Anmeldenummer: **84106401.7**

(22) Anmeldetag: **05.06.84**

(51) Int. Cl.⁴: **D 06 H 5/00,** D 06 F 67/00,
**F 16 G 3/10**

(54) **Mangelband für Wäschemangeln.**

(30) Priorität: **07.06.83 DE 3320448**

(43) Veröffentlichungstag der Anmeldung:
**27.12.84 Patentblatt 84/52**

(45) Bekanntmachung des Hinweises auf die Patenterteilung:
**01.04.87 Patentblatt 87/14**

(84) Benannte Vertragsstaaten:
**AT BE CH DE FR GB IT LI LU NL SE**

(56) Entgegenhaltungen:
**EP - A - 0 048 332
WO - A - 82/02412
CH - A - 421 039
DE - A - 2 103 124
FR - A - 1 179 787
FR - A - 1 271 602
FR - A - 2 146 521
GB - A - 724 154
US - A - 2 680 272
US - A - 3 524 542
US - A - 4 276 109**

(73) Patentinhaber: **Elasto-Press Schmitz GmbH,
Böcklerstrasse 11, D-3250 Hameln (DE)**

(72) Erfinder: **Zeggert, Werner, Lönsstrasse 15,
D-3250 Hameln 1 (DE)**

(74) Vertreter: **Patentanwälte Dipl.-Ing. Bodo Thielking
Dipl.-Ing. Otto Elbertzhagen, Gadderbaumer Strasse 20,
D-4800 Bielefeld 1 (DE)**

ACTORUM AG

### Beschreibung

Die Erfindung betrifft ein Mangelband für Wäschemangeln, dessen Enden miteinander verschweisst sind und das schmelzbare Garnanteile enthält.

Es ist bereits bekannt, die einander überlappenden Enden eines Mangelbands aus Polyesterfasern mit Hilfe einer speziellen Schweisszange zu verschweissen (DE-OS 21 03 124). Diese bekannte Schweisszange besitzt aufheizbare Spitzen, die beim Verschweissen durch die beiden einander überlappenden Enden hindurchtauchen. Die beheizten Spitzen der Schweisszange schmelzen die übereinanderliegenden Bandenden durch, und es entstehen Löcher mit rings umlaufenden kraterförmigen Erhebungen auf den Breitseiten der zusammengefügten Enden. Diese kraterförmigen Erhebungen arbeiten sich im Betrieb ab, und dies führt dazu, dass die Enden sich wieder lösen.

Da das bekannte Schweissverfahren unzureichende Ergebnisse gebracht hat, werden die Enden der Mangelbänder überwiegend durch Verknotung miteinander verbunden. Nachteil dieser Verknotung ist, dass der Knoten biem Eintritt in den Mangelspalt zwischen Mulde und Walze leicht am Muldeneingang hängenbleiben kann. Dies kann zur Überdehnug und zum Abriss des Mangelbandes führen. Darüber hinaus hat die verknotete Lösung den Nachteil, dass der Knoten einen Abdruck auf dem gemangelten Wäschestück hinterlässt.

Der Erfindung liegt die Aufgabe zugrunde, ein Mangelband zu schaffen, dessen Enden miteinander verschweissbar sind, ohne dass beim Verschweissen über die Breitseite der Mangelbandenden vorstehende Verbindungspunkte oder Krater entstehen. Das Mangelband soll so ausgebildet sein, dass seine Festigkeit durch den Schweissvorgang nicht beeinträchtigt wird.

Die Lösung dieser Aufgabe erfolgt erfindungsgemäss dadurch, dass die Fäden des Mangelbandes zu mehr als 50 Gew.-% jedoch weniger als 80 Gew.-% aus einer ersten Komponente mit einem Schmelzpunkt von über 160° bestehen und mindestens aus einer zweiten, nicht schmelzbaren Komponente oder Komponente, deren Schmelzpunkt um wenigstens 20° über dem der ersten Komponente liegt.

Das erfindungsgemässe Mangelband erlaubt ein Verschweissen der Mangelbandenden ohne die bisher beim Schweissverfahren zwangsläufig auftretenden Nachteile:

Die Schweisszange wird so eingestellt, dass die Schweisstemperatur geringfügig über dem Schmelzpunkt der ersten Komponente liegt, jedoch unter dem Schmelzpunkt der zweiten Komponente. Die erwärmte, jedoch nicht geschmolzene zweite Komponente behält ihre Struktur beim Zusammenpressen der Schweissbacken bei, während die erste Komponente unter der Wärmeeinwirkung schmilzt und die aufeinanderliegenden Bereiche der Mangelbandenden miteinander verbindet. Bei entsprechender Ausgestaltung der Schweisszange mit mehreren punktförmigen oder noppenförmigen Elementen in den Schweissbakken entstehen kleine, zurückliegende Vertiefungen, die im Gegensatz zu den bekannten Schweissverbindungspunkten nicht abgeschliffen werden können.

Es hat sich als zweckmässig erwiesen, dass die erste Komponente Polyesterfasern sind.

Diese Faserarten verschaffen dem Mangelband besonders günstige mechanische Eigenschaften. Es ist möglich, auch andere ggf. zusätzliche Faseranteile mit vorzusehen. Statt einer schmelzfähigen zweiten Komponente ist es auch möglich, eine nichtschmelzende zweite Komponente vorzusehen, die die gewünschten mechanischen Festigkeiten sicherstellt.

Schliesslich wird noch vorgeschlagen, dass das Mangelband aus einem Gewebe besteht.

Nachstehend wird eine bevorzugte Ausführungsform der Erfindung anhand der Zeichnung im einzelnen beschrieben. Es zeigen:

Figur 1 eine perspektivische schematische Ansicht einer Mangel mit einem Mangelband,

Figur 2 eine schematische Darstellung der einander überlappenden Mangelbandenden mit einer schematischen Darstellung einer Schweisszange.

Im dargestellten Ausführungsbeispiel sind zwei Mangelwalzen 2 in zugehörigen Mangelmulden 4 angeordnet. Die Verbindung zwischen den Mangelmulden 4 wird durch eine Brücke 3 gebildet. Mit 1 ist ein endlos umlaufendes Mangelband bezeichnet, das über Umlenkrollen 7 und 8 sowie zwischen den Mangelwalzen 2 und den Mulden und über die Brücke 3 läuft.

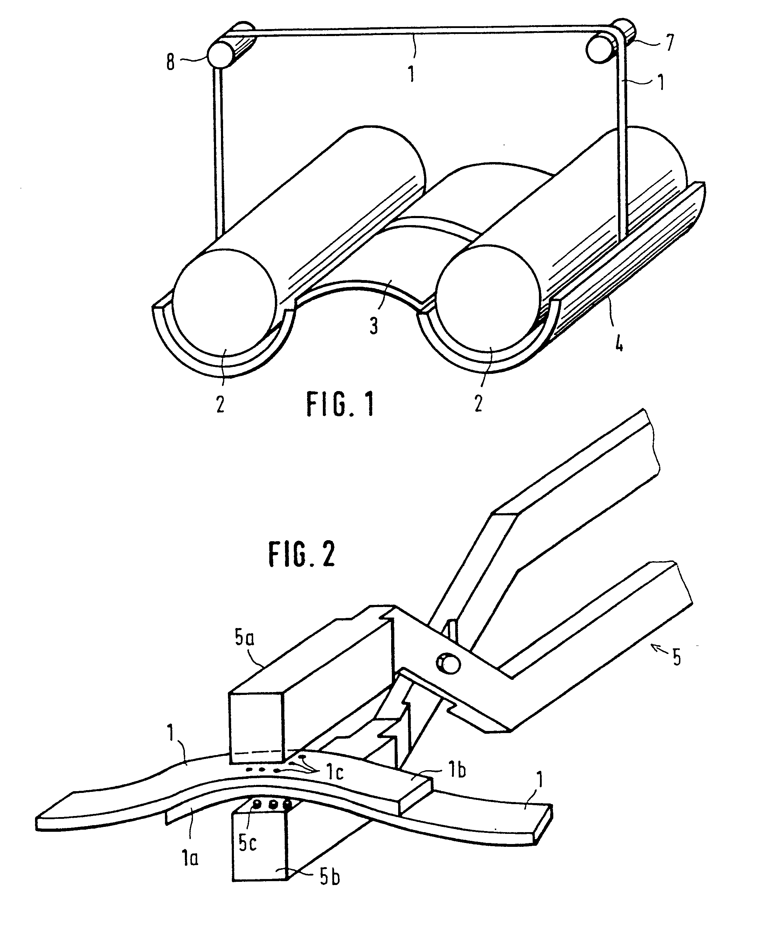

In Figur 2 sind die einander überlappenden Endbereiche 1a und 1b dargestellt, die mit Hilfe der Schweisszange 5 zusammengefügt werden. Die Schweisszange 5 besitzt zwei Schweissbacken 5a und 5b. Die Schweissbacken 5a und 5b besitzen in Richtung auf die Mangelbandenden 1a und 1b weisende vorspringende Noppen 5c, die erhitzt werden. Beim Zusammendrücken der Schweissbacken 5a und 5b bilden die erwärmten Noppen 5c kleine Vertiefungen 1c in der Anordnung der Noppen. Durch die Backenwärme der Schweisszange wird das Material der niedriger schmelzenden Komponenten verflüssigt und dringt in das verbleibende, nicht verflüssigte Gewebe ein, das durch die höher schmelzende Komponente gebildet wird. Nach dem Erkalten ist eine knotenfreie Flächenverbindung hergestellt.

### Patentansprüche

1. Mangelband für Wäschemangeln, dessen Enden miteinander verschweisst sind und das schmelzbare Garnanteile enthält, dadurch gekennzeichnet, dass die Fäden zu mehr als 50 Gew.-% jedoch weniger als 80 Gew.-% aus einer ersten Komponente mit einem Schmelzpunkt von über 160°C bestehen und mindestens aus einer zweiten Komponente besteht, die nicht schmelzbar ist oder deren Schmelzpunkt um wenigstens 20°C über dem der ersten Komponente liegt.

2. Mangelband nach Anspruch 1, dadurch ge-

**0 129 142**

kennzeichnet, dass die erste Komponente Polyesterfasern sind.

3. Mangelband nach Anspruch 1 oder 2, dadurch gekennzeichnet, dass die zweite Komponente Polyamidfasern sind.

4. Mangelband nach einem oder mehreren der Ansprüche 1 bis 3, dadurch gekennzeichnet, dass es gewebt ist.

## Claims

1. Calendering tape for Laundry ironing machines, the ends of which are bonded together and which contains fusible proportions of yarn, characterized in that the threads consist to more than 50% by weight but less than 80% by weight of a first component having a melting point of over 160°C and consists (sic) of a second component which is not fusible or whose melting point is at least 20°C above that of the first component.

2. Calendering tape according to Claim 1, characterized in that the first component is polyester fibres.

3. Calendering tape according to Claim 1 or 2, characterized in that the second component is polyamide fibres.

4. Calendering tape according to one or more of Claims 1 to 3, characterized in that it is woven.

## Revendications

1. Ruban pour machines à repasser le linge, dont les extrémités sont soudées l'une à l'autre et qui contient des fils fusibles, caractérisé en ce que les fils sont formés pour plus de 50% en poids, mais pour moins 80% en poids, d'un premier constituant dont le point de fusion est supérieur à 160°C et d'au moins un second constituant non fusible ou dont le point de fusion est supérieur d'au moins 20° à celui du premier constituant.

2. Ruban pour machines à repasser le linge suivant la revendication 1, caractérisé en ce que le premier constituant est formé de fibres de polyester.

3. Ruban pour machines à repasser le linge suivant la revendication 1 ou 2, caractérisé en ce que le second constituant est formé de fibres de polyamide.

4. Ruban pour machines à repasser le linge suivant l'une quelconque des revendications 1 à 3, caractérisé en ce qu'il est tissé.

FIG. 1

FIG. 2